# EUROPEAN PATENT APPLICATION

(11) **EP 4 675 476 A1**
(43) Date of publication of application: **07.01.2026**
(21) Application number: 25181313.5
(22) Date of filing: 06.06.2025
(51) Int. Cl.: G06F 21/57, G06F 21/60, H04L 9/40

(54) **COMMUNICATION DEVICE**

(30) Priority: 04.07.2024 JP 2024108449
(71) Applicant: Oki Electric Industry Co., Ltd., Minato-ku Tokyo 105-8460 (JP)
(72) Inventor: IWASAKI, Tsutomu, Tokyo, 105-8460 (JP)
(74) Representative: Betten & Resch

(57) **Abstract**

A printer 4 includes: a storage unit 36 that stores a current certificate to be used in HTTPS communication; a date and time management unit 38 that manage an expiration date of a certificate; a wired communication unit 32 that communicate with the PC 2 in HTTP communication or HTTPS communication; and a control unit 30 that controls operation of the printer 4. In a state where communication with the PC 2 in HTTPS communication is set, the control unit 30 causes the PC 2 and the wired communication unit 32 to communicate with each other in HTTPS communication if the current certificate is within the expiration date, whereas the control unit 30 causes the PC 2 and the wired communication unit 32 to communicate with each other in communication other than HTTPS communication if the current certificate is out of the expiration date.

## Description

### Technical Field

The present invention relates to a communication device and a communication system, and is suitably applicable to a communication device that updates an electronic certificate installed in the communication device.

### Background Art

There has been a technique in which, when the time comes for updating an electronic certificate installed in a device, a procedure for updating the certificate is displayed on a display unit of the device (see, for example, Patent Reference 1). Patent Reference 1: Japanese Patent Application Publication No. 2008-42381

### Disclosure of the Invention

In such a device, however, for users who are unfamiliar with certificate updates, the procedure for updating the certificate has been cumbersome and complicated.

The present invention has been made in view of the above circumstances and provides a communication device and a communication system capable of reducing the time and effort of the user.

To solve the problems described above, a communication device according to the present invention is a communication device capable of communicating with an external device in first communication and second communication with a higher security level than the first communication, and the communication device includes: a storage unit that stores a first electronic certificate to be used in the second communication; a management unit that manages an expiration date of the first electronic certificate; a communication unit that communicates with the external device in the first communication or the second communication; and a control unit that controls operation of the communication device, and in a state where the communication unit is set to communicate with the external device in the second communication, the control unit causes the external device and the communication unit to communicate with each other in the second communication if the first electronic certificate is within the expiration date, whereas the control unit causes the external device and the communication unit to communicate with each other in communication other than the second communication if the first electronic certificate is out of the expiration date.

With this configuration, according to the present invention, in a case where the terminal and the communication device are set to communicate with each other in the second communication with a higher security level than the first communication, if the first electronic certificate is out of the expiration date, the terminal and the communication device communicate with each other in the first communication, and the communication device receives the second electronic certificate within the expiration date from the terminal to thereby update the first electronic certificate to the second electronic certificate.

According to the present invention, in the case where the terminal and the communication device are set to communicate with each other in the second communication with a higher security level than the first communication, if the first electronic certificate is out of the expiration date, the terminal and the communication device communicate with each other in the first communication, and the communication device receives the second electronic certificate within the expiration date from the terminal to thereby update the first electronic certificate to the second electronic certificate. Thus, the present invention can provide a communication device and a communication system that can reduce user's effort.

### Brief Description of the Drawings

FIG. 1 is a block diagram illustrating a configuration of a certificate update system.
FIG. 2 is a block diagram illustrating a configuration of a PC.
FIG. 3 is a block diagram illustrating a configuration of a printer.
FIG. 4 is a diagram showing a communication setting screen.
FIG. 5 is a flowchart showing a certificate update processing procedure according to a first embodiment.
FIG. 6 is a flowchart showing a certificate update processing procedure according to a second embodiment.
FIG. 7 is a flowchart showing a certificate update processing procedure in a printer according to a third embodiment.
FIG. 8 is a flowchart showing a certificate writing processing procedure in a PC according to the third embodiment.

### Detailed Description of the Invention

Hereinafter, modes for carrying out the invention (hereinafter, referred to as embodiments) will be described with reference to the drawings.

### [1. First Embodiment]

### [1-1. Configuration of Certificate Update System]

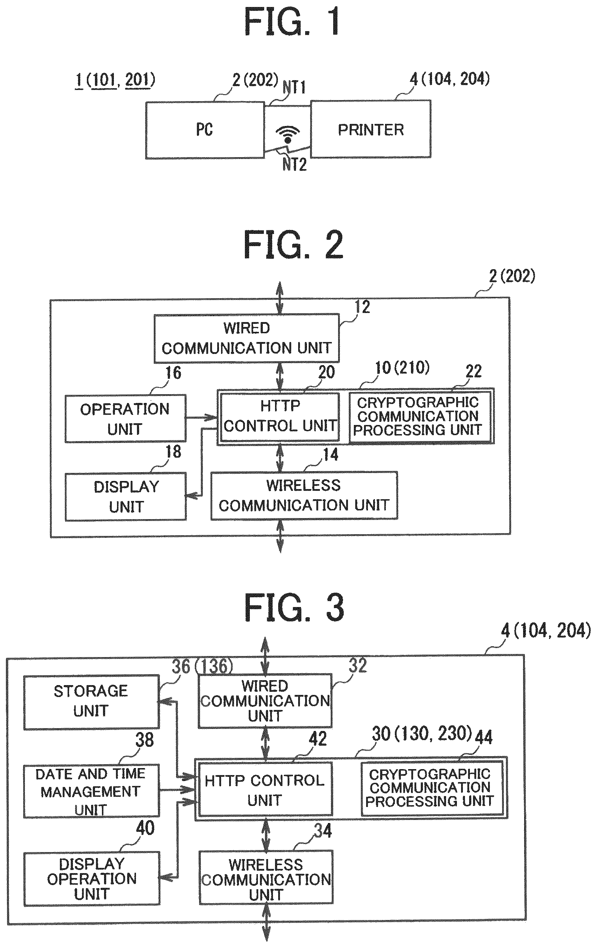

As illustrated in FIG. 1, a certificate update system 1 as a communication system is constituted by a personal computer (PC) 2 and a printer 4 located in an office, for example. The PC 2 and the printer 4 are connected to each other via a network NT1 that is a wired in-house local area network (LAN). The PC 2 and the printer 4 are also connected to each other via a network NT2 that is a wireless in-house LAN network.

The PC 2 is a personal computer and transmits a print job to the printer 4 so that the printer 4 thereby performs printing. In the printer 4, an SSL/TLS server electronic certificate (hereinafter also simply referred to as a certificate) that is a server verification certificate unique to each printer 4 is installed. The server verification certificate is used to prevent the PC 2 from accessing the printer 4 if a valid server verification certificate is not installed in the printer 4. Specifically, in accessing the printer 4 functioning as a server from the PC 2 in order to view a WEB page related to the printer 4, for example, if a valid server verification certificate is not installed in the printer 4, a message indicating this is displayed to the PC 2 to prevent the PC 2 from accessing the printer 4. It is necessary for the printer 4 to update the certificate regularly in order to be accessed from the PC 2 by HTTPS.

The PC 2 as a terminal connects to the printer 4 and updates the certificate of the printer 4 by rewriting a current certificate that is an expired certificate installed in a storage unit 36 of the printer 4 to a new certificate that is a new certificate within an expiration date. Specifically, the PC 2 connects to a WEB page of the printer 4 and uploads the new certificate to the printer 4 as a server to thereby update the certificate of the printer 4 from the current certificate to the new certificate.

The printer 4 communicates with the PC 2 via the network NT1 or NT2, and when receiving a print job from the PC 2, the printer 4 prints print data shown by the print job on a predetermined medium.

Hereinafter, communication between the printer 4 and the PC 2 in accordance with HyperText Transfer Protocol (HTTP) will also be referred to as HTTP communication, and communication between the printer 4 and the PC 2 in accordance with HyperText Transfer Protocol over SSL (HTTPS) will also be referred to as HTTPS communication.

### [1-2. PC Configuration]

As illustrated in FIG. 2, the PC 2 is constituted by a control unit 10, a wired communication unit 12, a wireless communication unit 14, an operation unit 16, and a display unit 18. The control unit 10 is constituted by a central processing unit (CPU), and reads a predetermined program from a storage unit (not shown) and controls the PC 2 in a centralized manner. The control unit 10 includes an HTTP control unit 20 and a cryptographic communication processing unit 22. The HTTP control unit 20 is an HTTP client function that controls access to an HTTP server based on an address input to a WEB browser displayed on the display unit 18 by an operation of the operation unit 16. The cryptographic communication processing unit 22 is a function of performing communication by encrypting HTTP using Transport Layer Security (TLS).

The wired communication unit 12 is, for example, a wired LAN board mounted on the PC 2, and is connected to the network NT1 by a wired LAN cable, and transmits and receives data to/from the printer 4 by TCP/IP via the network NT1. The wireless communication unit 14 is, for example, a wireless LAN board mounted on the PC 2, establishes the network NT2 that is wireless communication by Wi-Fi with the printer 4, and transmits and receives data by TCP/IP.

The operation unit 16 is constituted by, for example, a keyboard and a mouse, and acquires an operation input from a user. The display unit 18 is constituted by, for example, a liquid crystal display, and outputs, to the user, various types of information such as a WEB browser for the user to access a WEB page of the printer 4.

### [1-3. Configuration of Printer]

As illustrated in FIG. 3, the printer 4 is constituted by a control unit 30, a wired communication unit 32, a wireless communication unit 34, a storage unit 36, a date and time management unit 38, and a display operation unit 40. The control unit 30 is constituted by a central processing unit (CPU), reads a predetermined program from the storage unit 36, and controls the printer 4. The control unit 30 includes an HTTP control unit 42 and a cryptographic communication processing unit 44. The HTTP control unit 42 is an HTTP server function that processes HTTP communication received from the network NT1 or NT2. The cryptographic communication processing unit 44 is a function of encrypting HTTP using TLS and performing communication.

The wired communication unit 32 is, for example, a wired LAN board mounted on the printer 4, and is connected to the network NT1 by a wired LAN cable, and transmits and receives data to/from the PC 2 that is an external device via the network NT1. The wireless communication unit 34 is, for example, a wireless LAN board mounted on the printer 4, establishes the network NT2 that is wireless communication by Wi-Fi with the PC 2, and transmits and receives data by TCP/IP.

The storage unit 36 stores and manages device information, various setting values, and certificates of the printer 4. The date and time management unit 38 manages the current date and time. The display operation unit 40 as a selection unit is constituted by, for example, a touch panel, and outputs information to the user and acquires an operation input from the user.

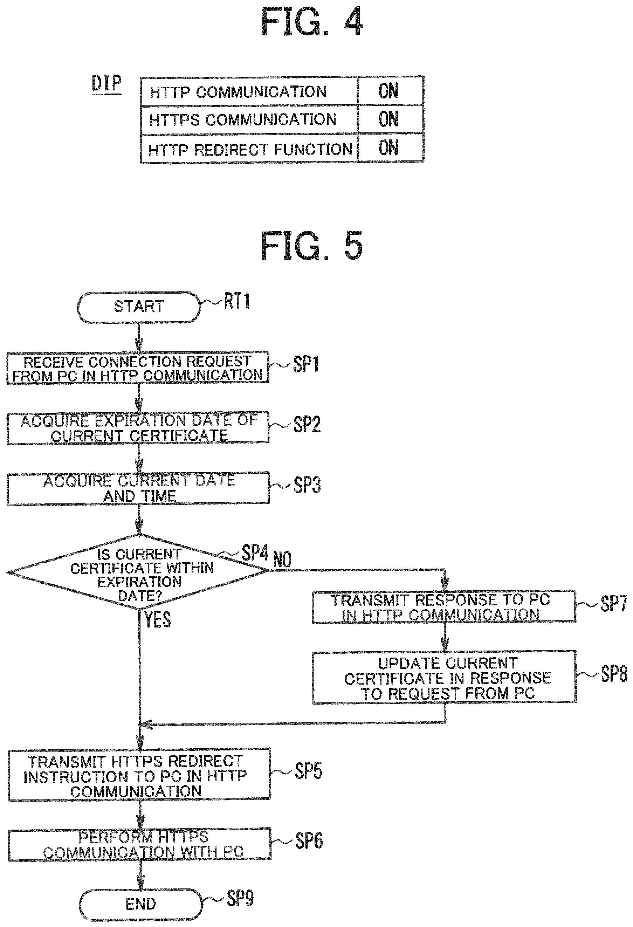

The printer 4 displays a communication setting screen DIP shown in FIG. 4 on the display operation unit 40, based on an operation by the user to the display operation unit 40. The user operates the communication setting screen DIP to thereby set HTTP communication, HTTPS communication, and an HTTP redirect function to ON (enabled) or OFF (disabled). The printer 4 stores a setting value of ON or OFF of each of the HTTP communication, the HTTPS communication, and the HTTP redirect function in the storage unit 36 in response to an operation input by the user to the communication setting screen DIP. In the case of the state illustrated in FIG. 4, all the HTTP communication, the HTTPS communication, and the HTTP redirect function are set ON.

In a case where the HTTP communication is set ON, the printer 4 is in a state where the HTTP communication with an external device is enabled, and waits for the HTTP communication from the PC 2. On the other hand, in a case where the HTTP communication is set OFF, the printer 4 is in a state where the HTTP communication with the external device is disabled, and does not wait for the HTTP communication from the PC 2.

In a case where the HTTPS communication is set ON, the printer 4 is in a state where the HTTPS communication with an external device is enabled, and waits for the HTTPS communication from the PC 2. On the other hand, in a case where the HTTPS communication is set OFF, the printer 4 is in a state where the HTTPS communication with the external device is disabled, and does not wait for the HTTPS communication from the PC 2.

The HTTP redirect function is a function of switching the communication method from the HTTP communication to the HTTPS communication with high security while the printer 4 is communicating with an external device in the HTTP communication with low security. That is, the HTTP redirect function is a function of responding to an external device for connection with switching from the HTTP communication to the HTTPS communication in a case where the external device issues a connection request in the HTTP communication in a state where the printer 4 is set to communicate with the external device in the HTTPS communication. At this time, the printer 4 transmits an HTTPS redirect instruction that is a response for redirecting the HTTP communication to the HTTPS communication, to the external device in the HTTP communication. In a case where the HTTP redirect function is set ON, the printer 4 transmits an HTTPS redirect instruction to the PC 2 when connection is performed from the PC 2 in the HTTP communication in a state where the printer 4 is set to communicate with the external device in the HTTPS communication. On the other hand, in a case where the HTTP redirect function is set OFF, the printer 4 communicates with the PC 2 in the HTTP communication without transmitting the HTTPS redirect instruction to the PC 2 when connection is performed from the PC 2 in the HTTP communication in a state where the printer 4 is set to communicate with the external device in the HTTPS communication.

### [1-4. Certificate Update Processing]

Next, a certificate update processing procedure by the printer 4 will now be described with reference to the flowchart shown in FIG. 5. The control unit 30 reads a certificate update processing program from the storage unit 36 and executes the program, thereby starting a certificate update processing procedure RT1 shown in FIG. 5 and proceeding to step SP1. In step SP1, all the HTTP communication, the HTTPS communication, and the HTTP redirect function are set ON.

In step SP1, the control unit 30 receives a connection request for connection from the PC 2 to the printer 4 (e.g., GET http://192.168.100.100:80/) in HTTP communication from the PC 2 by the wired communication unit 32, and proceeds to step SP2. In step SP2, the control unit 30 acquires an expiration date of a current certificate from the storage unit 36 by the HTTP control unit 42, and proceeds to step SP3. In step SP3, the control unit 30 acquires the current date and time from the date and time management unit 38 by the HTTP control unit 42, and proceeds to step SP4.

In step SP4, the control unit 30 compares the expiration date of the current certificate acquired in step SP2 with the current date and time acquired in step SP3, thereby determining whether the current certificate is within the expiration date or not. If a positive result is obtained in this step, this means that the current certificate has not expired (i.e., is within the expiration date) and is valid, and then, the control unit 30 proceeds to step SP5.

In step SP5, the control unit 30 transmits an HTTPS redirect instruction (e.g., HTTP/1.1. 302 Moved Temporarily https://192.168.100.100:443/) to the PC 2 in the HTTP communication by the wired communication unit 32, and proceeds to step SP6. When the PC 2 receives the HTTPS redirect instruction from the printer 4 in the HTTP communication, the PC 2 switches the communication method from HTTP to HTTPS and communicates with the printer 4 in the HTTPS communication by the wired communication unit 12 (i.e., performs TLS handshake). Specifically, the PC 2 connects to https://192.168.100.100:443. Thus, in step SP6, the control unit 30 communicates with the PC 2 in the HTTPS communication by the wired communication unit 32, proceeds to step SP9, and finishes the certificate update processing procedure RT1.

On the other hand, if a negative result is obtained in step SP4, this means that the current certificate is out of the expiration date and is invalid, and then, the control unit 30 does not transmit an HTTPS redirect instruction and proceeds to step SP7. In step SP7, the control unit 30 transmits a response (e.g., HTTP200) to the PC 2 in the HTTP communication by the wired communication unit 32, and proceeds to step SP8.

When the PC 2 receives the response from the printer 4 in the HTTP communication by the wired communication unit 12, the PC 2 accesses a WEB page (http://192.168.100.100:80/) of the printer 4 in the HTTP communication by the wired communication unit 12. This WEB page displays a message indicating that the HTTP communication with low security is employed and a warning indicating that the current certificate needs to be updated. The PC 2 moves from the WEB page of the printer 4 to a page for updating the certificate, and uploads a new certificate to the printer 4 in the HTTP communication by the wired communication unit 12.

In step SP8, the control unit 30 updates the current certificate to the new certificate in response to a request from the PC 2 in the HTTP communication, and proceeds to step SP5.

In step SP5, the control unit 30 transmits an HTTPS redirect instruction (e.g., HTTP/1.1.302 Moved Temporarily https://192.168.100.100:443/) to the PC 2 in the HTTP communication by the wired communication unit 32, and proceeds to step SP6. When the PC 2 receives the HTTPS redirect instruction from the printer 4 in the HTTP communication, the PC 2 switches the communication method from HTTP to HTTPS, and communicates with the printer 4 in the HTTPS communication by the wired communication unit 12. Specifically, the PC 2 connects to https://192.168.100.100:443. Thus, in step SP6, the control unit 30 communicates with the PC 2 in the HTTPS communication by the wired communication unit 32, proceeds to step SP9, and finishes the certificate update processing procedure RT1.

### [1-5. Advantages and Others]

In the configuration described above, in the certificate update system 1, the HTTPS redirect function that is the function of transmitting the HTTPS redirect instruction of instructing switching from the HTTP communication to the HTTPS communication with high security from the printer 4 to the PC 2 is set to be enabled or disabled in the printer 4 in a case where the printer 4 receives the connection request from the PC 2 in the HTTP communication that is non-encrypted communication with lower security than the HTTPS communication. Accordingly, the certificate update system 1 can enhance security of communication between the printer 4 and the PC 2 as compared to the HTTP communication.

When the printer 4 receives the connection request from the PC 2 in the HTTP communication in a case where the HTTPS redirect function is set to be enabled in the printer 4, the certificate update system 1 determines whether the current certificate is within the expiration date or not, and if the current certificate is out of the expiration date, the certificate update system 1 does not transmit the HTTPS redirect instruction from the printer 4 to the PC 2, cancels the HTTP redirect function, and causes the printer 4 to respond to the PC 2 in response to the connection request in the HTTP communication to thereby allow the PC 2 to connect to the printer 4 in the HTTP communication. Subsequently, the certificate update system 1 causes the PC 2 to connect to the WEB page of the printer 4 in the HTTP communication to update the certificate of the printer 4.

Accordingly, if the current certificate is out of the expiration date, the certificate update system 1 can prevent a failure in updating the current certificate because the printer 4 does not accept the HTTP communication so that the PC 2 cannot connect to the WEB page of the printer 4. Accordingly, if the current certificate is out of the expiration date, the certificate update system 1 causes the PC 2 to connect to the printer 4 not in the HTTPS communication but in the HTTP communication to update the current certificate of the printer 4. In this manner, the certificate update system 1 eliminates the need to force the user to perform an operation for updating the certificate of the printer 4, and thus, can significantly reduce user's effort for updating the certificate, thereby enhancing usability.

On the other hand, in the certificate update system 1, in a case where the HTTPS redirect function is set to be enabled in the printer 4, when a connection request is received from the PC 2 in the HTTP communication, the certificate update system 1 determines whether the current certificate is within the expiration date or not, and if the current certificate is within the expiration date, the HTTPS redirect instruction is transmitted from the printer 4 to the PC 2 so that the PC 2 and the printer 4 communicate with each other in the HTTPS communication. Accordingly, the certificate update system 1 can enhance security of communication between the PC 2 and the printer 4 as compared to the HTTP communication.

In the configuration described above, the printer 4 is capable of communicating with the PC 2 as an external device in the HTTP communication as first communication and the HTTPS communication as second communication with a higher security level than the HTTP communication, and includes: the storage unit 36 that stores the current certificate as a first electronic certificate to be used in the HTTPS communication; the HTTP control unit 42 and the date and time management unit 38 that manage an expiration date of the certificate; the HTTP control unit 42 and the wired communication unit 32 that communicate with the PC 2 in the HTTP communication or the HTTPS communication; and the control unit 30 that controls operation of the printer 4. In a state where communication with the PC 2 is set to be performed in the HTTPS communication, the control unit 30 causes the PC 2 and the wired communication unit 32 to communicate with each other in the HTTPS communication if the current certificate is within the expiration date, whereas if the current certificate is out of the expiration date, the control unit 30 causes the PC 2 and the wired communication unit 32 to communicate with each other in communication other than the HTTPS communication.

Accordingly, in a case where the PC 2 and the printer 4 are set to communicate with each other in the HTTPS communication with a higher security level than the HTTP communication, if the current certificate is out of the expiration date, the printer 4 communicates with the PC 2 in the HTTP communication, and receives a new certificate as a second electronic certificate within the expiration date from the PC 2, thereby updating the current certificate to the new certificate.

### [2. Second Embodiment]

### [2-1. Configuration of Certificate Update System]

As illustrated in FIG. 1, a certificate update system 101 as a communication system according to a second embodiment is different from the certificate update system 1 according to the first embodiment in including a printer 104 as a communication device instead of the printer 4, but is configured similarly in other respects.

### [2-2. Configuration of Printer]

As illustrated in FIG. 3, the printer 104 according to the second embodiment is different from the printer 4 according to the first embodiment in including a control unit 130 (e.g., control circuitry) instead of the control unit 30 and a storage unit 136 instead of the storage unit 36, but is configured similarly in other respects.

The storage unit 136 stores a non-redirect list in advance. The non-redirect list includes a list of MAC address and IP address of the PC 2. The MAC address and IP address are serve as identification information of the PC 2 to be a target of communication in HTTP communication without transmitting an HTTPS redirect instruction when a connection request is received in the HTTP communication in a state where the printer 104 is set to communicate with the PC 2 in HTTPS communication. That is, the non-redirect list is a list of MAC addresses and IP addresses of the PC 2 that do not redirect HTTP communication to HTTPS communication. The PC 2 stored in this non-redirect list is operated by an administrator having the authority to update the certificate of the printer 104.

### [2-3. Certificate Update Processing]

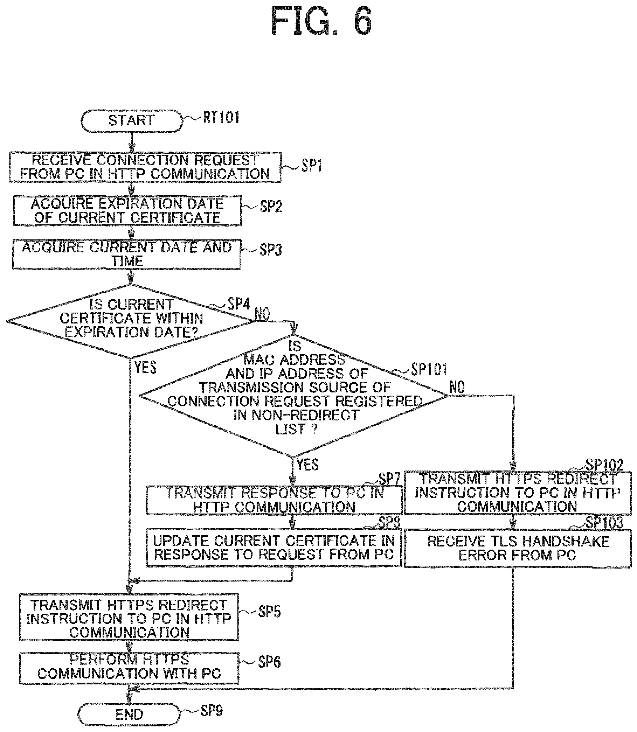

Next, a certificate update processing procedure by the printer 4 will be described with reference to the flowchart shown in FIG. 6 where the same reference numerals are given to the steps corresponding to those in FIG. 5. The control unit 130 reads a certificate update processing program from the storage unit 136 and executes the program, thereby starting a certificate update processing procedure RT101 shown in FIG. 6 and proceeding to step SP1. In step SP1, all the HTTP communication, the HTTPS communication, and the HTTP redirect function are set ON. The certificate update processing procedure RT101 (FIG. 6) is different from the certificate update processing procedure RT1 (FIG. 5) in adding steps SP101, SP102, and SP103, but is configured similarly in other respects.

The control unit 130 proceeds to step SP4 via steps SP1, SP2, and SP3, and when obtaining a negative result in step SP4, the control unit 130 proceeds to step SP101. In step SP101, the control unit 130 determines whether a MAC address and an IP address of the PC 2 that is a transmission source of a connection request are registered in the non-redirect list of the storage unit 136 or not. If a positive result is obtained in this step, since the PC 2 as the transmission source of the connection request is managed by the administrator having the authority of updating the certificate of the printer 104, the positive result means that even if the printer 104 communicates with this PC 2 not in the HTTPS communication but in the HTTP communication, the risk in security is low. Then, the control unit 130 proceeds to step SP7, and performs the same processing as the certificate update processing procedure RT1 (FIG. 5).

On the other hand, if a negative result is obtained in step SP101, since the PC 2 as the transmission source of the connection request is not managed by the administrator having the authority of updating the certificate of the printer 104, the negative result means that communication with this PC 2 not in the HTTPS communication but in the HTTP communication has a high risk in security. Then, the control unit 130 proceeds to step SP102.

In step SP102, in a manner similar to step SPS, the control unit 130 transmits an HTTPS redirect instruction to the PC 2 in the HTTP communication by the wired communication unit 32, and proceeds to step SP103. When the PC 2 receives the HTTPS redirect instruction from the printer 104 in the HTTP communication, the PC 2 switches the communication method from HTTP to HTTPS, and communicates with the printer 104 in the HTTPS communication by the wired communication unit 12 (i.e., performs TLS handshake). When the TLS handshake is performed from the PC 2, the printer 104 transmits the current certificate to the PC 2 by the wired communication unit 32. When the PC 2 receives the current certificate from the printer 104, the PC 2 checks the expiration date of this current certificate, and since the current certificate is out of the expiration date, the PC 2 transmits a TLS handshake error indicating a failure in TLS handshake to the printer 104 by the wired communication unit 12. Thus, in step SP103, the control unit 130 receives the TLS handshake error from the printer 104 by the wired communication unit 32, proceeds to step SP9, and finishes the certificate update processing procedure RT101.

### [2-4. Advantages]

In the configuration described above, the certificate update system 101 registers in advance an IP address and a MAC address as identification information of the PC 2 that is not redirected from the HTTP communication to the HTTPS communication and is operated by the administrator having the authority of updating the certificate of the printer 104, in the non-redirect list of the storage unit 136 of the printer 104. The certificate update system 101 determines whether an IP address and a MAC address of the transmission source of the connection request is registered in the non-redirect list or not in the printer 104 when the printer 104 receives the connection request from the PC 2 in the HTTP communication in a case where the current certificate is out of the expiration date.

Further, in a case where the PC 2 is registered in the non-redirect list, since the PC 2 as the transmission source of the connection request is managed by the administrator having the authority of updating the certificate of the printer 104, the certificate update system 101 determines that the risk in security is low even if the printer 104 communicates with the PC 2 not in the HTTPS communication but in the HTTP communication as long as the target of the communication is the PC 2, and the certificate update system 101 prevents the printer 104 from transmitting the HTTPS redirect instruction to the PC 2 as the transmission source of the connection request, performs HTTP communication, and updates the certificate by the PC 2.

On the other hand, in a case where the PC 2 is not registered in the non-redirect list, since the PC 2 as the transmission source of the connection request is not managed by the administrator having the authority of updating the certificate of the printer 104, the certificate update system 101 determines that the risk in security is high when the printer 104 communicates with this PC 2 not in the HTTPS communication but in the HTTP communication, transmits the HTTPS redirect instruction from the printer 104 to the PC 2 as the transmission source of the connection request, and sets the TLS handshake error because the current certificate is out of the expiration date.

As described above, in the case where the current certificate is out of the expiration date, the certificate update system 101 updates the certificate in the HTTP communication without redirecting to the HTTPS communication only for the PC 2 registered in the non-redirect list among transmission sources of connection requests. Thus, in a manner similar to the certificate update system 1 according to the first embodiment, as compared to a case where the certificate is updated in the HTTP communication without redirecting to the HTTPS communication for all the PC 2 as transmission sources of connection requests if the current certificate is out of the expiration date, the certificate update system 101 can limit the PC 2 for non-encrypted communication as much as possible, improve security, and safely update the certificate without allowing a third party to read communication contents.

In other respects, the certificate update system 101 according to the second embodiment can achieve the same advantages as those of the certificate update system 1 according to the first embodiment.

### [3. Third Embodiment]

### [3-1. Configuration of Certificate Update System]

As illustrated in FIG. 1, a certificate update system 201 as a communication system according to a third embodiment is different from the certificate update system 1 according to the first embodiment in including a PC 202 as an external device instead of the PC 2 and a printer 204 as a communication device instead of the printer 4, but is similarly configured in other respects.

### [3-2. PC Configuration]

As illustrated in FIG. 2, the PC 202 according to the third embodiment is different from the PC 2 according to the first embodiment in including a control unit 210 instead of the control unit 10, but is similarly configured in other respects.

The PC 202 is a personal computer that rewrites a current certificate installed in a storage unit 36 of the printer 204 to a new certificate. The PC 202 is located at a position at which the PC 202 enables wireless communication with the printer 204 when the printer 204 enters an access point mode and activates a wireless access point.

The control unit 210 searches for a wireless access point of an SSID indicating that a certificate as a search target has expired, via a wireless communication unit 14. In this embodiment, an SSID in which the printer 204 whose certificate has expired is activated is defined as an SSID starting with "expired-". When the SSID as a search target is found, the control unit 210 connects to the SSID by a WPA2-PSK method, and uses a character string obtained by combining a combination of "key-" and a character string starting with "expired-" of the SSID as a password. In this embodiment, since the SSID of the wireless access point at which the printer 204 is activated is "expired-printer-1", the password is "key-printer-1". Subsequently, the control unit 210 writes the new certificate in the storage unit 36 of the printer 204 via the wireless communication unit 14, for the printer 204 for which the found certificate has expired.

### [3-3. Configuration of Printer]

As illustrated in FIG. 3, the printer 204 according to the second embodiment is different from the printer 4 according to the first embodiment in including a control unit 230 (e.g., control circuitry) instead of the control unit 30, but is similarly configured in other respects.

When the printer 204 performs wired communication with the PC 202 via the network NT1 and receives a print job from the PC 202, the printer 204 prints print data indicated by the print job on a predetermined medium. In an infrastructure mode in which printing is performed, the printer 4 performs wireless communication with the PC 202 via the network NT2 and, when receiving a print job from the PC 202, the printer 4 prints print data indicated by the print job on a predetermined medium.

On the other hand, in an access point mode in which the printer 204 is activated as a wireless access point to serve as an access point itself and is connected from the PC 202, the printer 204 is wirelessly connected from the PC 202, and a current certificate in the storage unit 36 is updated to a new certificate. In this access point mode, the printer 204 performs wireless communication as short-range wireless communication with the PC 202 not via the network NT1 for wired communication but via the network NT2 for wireless communication.

The printer 204 is assigned "printer-1" as a name for identifying the printer 204 (hereinafter, referred to as a printer name). When the printer 204 activates the wireless access point and enters the access point mode, the control unit 230 generates an SSID and a password as connection information based on the printer name of the printer 204. In this embodiment, the printer 204 generates "expired-printer-1" as the SSID and "key-printer-1" as the password in combination with the printer name. The SSID of the printer 204 in the access point mode is an SSID dedicated to certificate update, and is a character string different, and generated separately, from the SSID of the printer 204 in the infrastructure mode.

### [3-4. Certificate Update Processing by Printer]

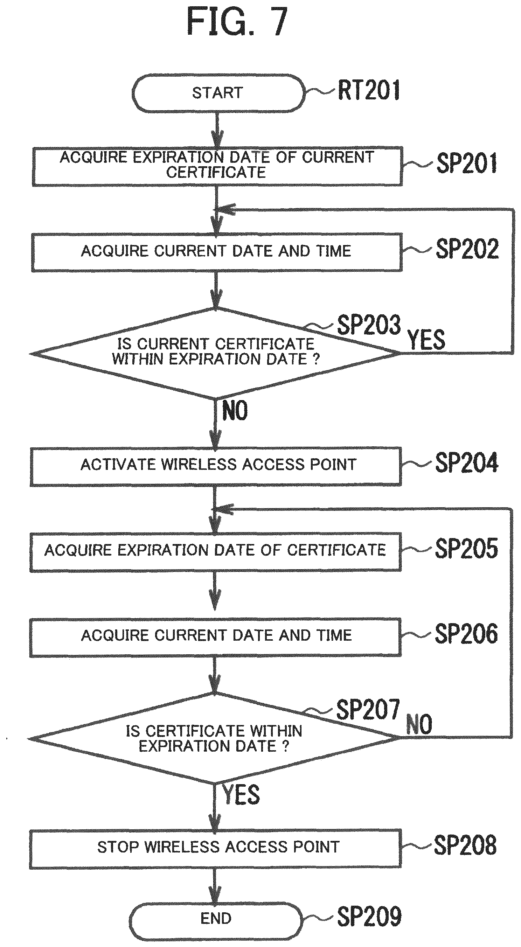

Next, a certificate update processing procedure by the printer 204 will be described with reference to the flowchart shown in FIG. 7. The control unit 230 reads a certificate update processing program from the storage unit 36 and executes the program, thereby starting a certificate update processing procedure RT201 shown in FIG. 7 and proceeding to step SP201. In step SP201, all the HTTP communication, the HTTPS communication, and the HTTP redirect function are set ON. At this time, the printer 204 is in the infrastructure mode.

In step SP201, the control unit 230 acquires an expiration date of a current certificate from the storage unit 36 by the HTTP control unit 42, and proceeds to step SP202. In step SP202, the control unit 230 acquires the current date and time from the date and time management unit 38 by the HTTP control unit 42, and proceeds to step SP203.

In step SP203, the control unit 230 compares the expiration date of the current certificate acquired in step SP201 with the current date and time acquired in step SP202, thereby determining whether the current certificate is within the expiration date or not. If a positive result is obtained in this step, this means that the current certificate has not expired (i.e., is within the expiration date) and is valid, and then, the control unit 230 returns to step SP202, and repeats steps SP202 and SP203 to regularly determine whether the current certificate becomes invalid or not.

On the other hand, if a negative result is obtained in step SP203, this means that the current certificate has expired and is invalid, and then, the control unit 230 proceeds to step SP204. In step SP204, the control unit 230 controls the wireless communication unit 34 and activates the wireless access point to thereby set the printer 204 in the access point mode, and proceeds to step SP205. At this time, the control unit 230 combines the SSID of the wireless access point to be activated with a character string generated from the printer name to obtain "expired-printer-1", and sets the password to a character string "key-printer-1" generated from "key-" and the printer name. At this time, the printer 204 is in the state of requesting a new certificate from the PC 202.

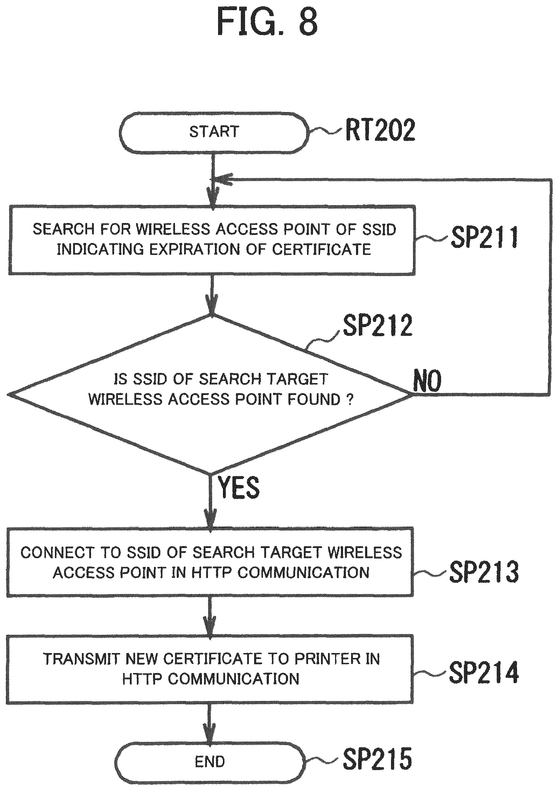

When the printer 204 is activated as the wireless access point, in a certificate writing processing procedure RT202 (FIG. 8) described later, the PC 202 wirelessly connects to the printer 204, and replaces the current certificate in the storage unit 36 with a new certificate.

In step SP205, the control unit 230 acquires an expiration date of the current certificate from the storage unit 36 by the HTTP control unit 42, and proceeds to step SP206. In step SP206, the control unit 230 acquires the current date and time from the date and time management unit 38 by the HTTP control unit 42, and proceeds to step SP207.

In step SP207, the control unit 230 compares the expiration date of the certificate acquired in step SP205 with the current date and time acquired in step SP206, thereby determining whether the certificate is within the expiration date or not. If a negative result is obtained in this step, this means that the current certificate has not been updated to a new certificate yet and the current certificate has expired and is invalid. Then, the control unit 230 returns to step SP205, and repeats steps SP205, SP206, and SP207 to regularly determine whether the new certificate becomes valid or not.

On the other hand, in step SP207, if a positive result is obtained, this means that the current certificate has been updated to a new certificate, and the new certificate has not expired (i.e., is within the expiration date) and is valid. Then, the control unit 230 proceeds to step SP208.

In step SP208, the control unit 230 controls the wireless communication unit 34 to stop the wireless access point to thereby return the printer 204 to the infrastructure mode, returns to step SP209, and finishes the certificate update processing procedure RT201.

### [3-5. Certificate Writing Processing by PC]

Next, a certificate writing processing procedure by the PC 202 that is a process of finding a printer 204 whose certificate has expired and writing a new certificate in this printer 204 will be described with reference to the flowchart shown in FIG. 8. The control unit 210 reads a certificate writing processing program from storage unit (not shown) and executes the program, thereby starting the certificate writing processing procedure RT202 shown in FIG. 8 and proceeding to step SP211.

In step SP211, the control unit 210 of the PC 202 searches for a wireless access point (hereinafter, also referred to as a search target wireless access point) of an SSID indicating expiration of a certificate that is a search target, and proceeds to step SP212. In this embodiment, an SSID in which the printer 204 whose certificate has expired is activated is defined as an SSID starting with "expired-" as described above. Accordingly, the control unit 210 searches for a wireless access point of an SSID starting with "expired-".

In step SP212, the control unit 210 determines whether an SSID of the search target wireless access point has been found or not. In this step, if a negative result is obtained, this means that an SSID of the search target wireless access point is not found. Then, the control unit 210 returns to step SP211, and repeats steps SP211 and SP212 to regularly search for an SSID of the search target wireless access point. On the other hand, in step SP212, if a positive result is obtained, this means that an SSID of the search target wireless access point is found. Then, the control unit 210 proceeds to step SP213. In step SP213, the control unit 210 connects to the SSID of the search target wireless access point using a character string obtained by combining "key-" and a character string starting with "expired-" of the SSID as a password, by a WPA2-PSK method in the HTTP communication, and proceeds to step SP214. In this embodiment, since the SSID of the wireless access point at which the printer 204 is activated is "expired-printer-1", the password is "key-printer-1".

In step SP214, the control unit 210 connects to the connected printer 204, that is, the WEB page of the printer 204 as a target of update of the certificate, in HTTP communication by the wireless communication unit 14, moves from the WEB page to a page for updating the certificate, and uploads a new certificate to the printer 204 in the HTTP communication by the wireless communication unit 14. The process proceeds to step SP215, and the certificate writing processing procedure RT202 is finished.

### [3-6. Advantages]

In the configuration described above, the certificate update system 201 regularly determines whether the current certificate has expired or not in the printer 204. If the certificate has expired, the certificate update system 201 activates the printer 204 as a wireless access point and shifts from the infrastructure mode to the access point mode, and causes the PC 202 to wirelessly communicate with the printer 204. Subsequently, in the certificate update system 201, when the printer 204 in the access point mode is wirelessly connected from the PC 202 in the HTTP communication, the printer 204 does not transmit an HTTPS redirect instruction to the PC 202, and the HTTP communication is performed between the PC 202 and the printer 204. Thereafter, the certificate update system 201 causes the PC 202 to store a valid new certificate in the storage unit 36 of the printer 204 to thereby update the certificate, and then, returns the printer 204 to the infrastructure mode. Accordingly, the certificate update system 201 eliminates the need to force the user to perform an operation for updating the certificate of the printer 204, and thus, can significantly reduce user's effort for updating the certificate.

In the manner described above, in the certificate update system 201, the PC 202 and the printer 204 are directly connected to each other wirelessly via the network NT2 by the WPA2-PSK method in the access point mode, and a new certificate is transmitted from the PC 202 to the printer 204 in the HTTP communication. Accordingly, in the certificate update system 201, even when non-encrypted HTTP communication is performed between the PC 202 and the printer 204, communication is performed by the encrypted WPA2-PSK method, and thus, security is enhanced, and the certificate can be safely updated without allowing a third party to read communication contents.

In other respects, the certificate update system 201 according to the third embodiment can achieve the same advantages as those of the certificate update system 1 according to the first embodiment.

### [4. Other Embodiments]

In the first embodiment described above, in step SP7 of the certificate update processing procedure RT1 (FIG. 5), the printer 4 may transmit a response for redirecting to a page for updating the certificate of the printer 4 in the HTTP communication, to the PC 2 in the HTTP communication by the wired communication unit 32. In this case, the printer 4 can eliminate the process of moving from the WEB page of the printer 4 to the page for updating the certificate in the PC 2. The same holds for the second embodiment.

In the first embodiment described above, although security temporarily degrades, the printer 4 may temporarily turn off the HTTP redirect function by a user's operation on the communication setting screen DIP (FIG. 4) to update the certificate by the PC 2 in the HTTP communication, and when update of the certificate is completed, the printer 4 may turn on the HTTP redirect function by a user's operation on the communication setting screen DIP (FIG. 4).

In addition, in the case described in the first embodiment, the printer 4 is configured to turn on or off of each of the HTTP communication, the HTTPS communication, and the HTTP redirect function, in accordance with a user's operation input on the communication setting screen DIP (FIG. 4). The present invention is not limited to this example, and the printer 4 may be set on in advance for each of the HTTP communication, the HTTPS communication, and the HTTP redirect function. The same holds for the second and third embodiments.

Further, in the case described in the first embodiment, the present invention is applied to the certificate update system 1 that updates the current certificate to the new certificate by the PC 2 when the current certificate installed in the printer 4 has expired. The present invention is not limited to this example, and is also applicable to a certificate update system that causes the PC 2 to install a valid certificate to be first installed in the printer 4 in the printer 4 in a case where no valid certificate is installed in the printer originally (i.e., the storage unit 36 does not store any certificate). The same holds for the second and third embodiments.

In the case described in the first embodiment, the certificate for connection from the PC 2 to the printer 4 is stored in the storage unit 36 of the printer 4. The present invention is not limited to this example, and the certificate may be stored in various other locations, such as a storage unit of the PC 2 or a storage device such as an external USB memory that can be connected to the printer 4.

In the case described in the second embodiment, in step SP101 of the certificate update processing procedure RT101 (FIG. 6), the printer 104 determines whether the MAC address and the IP address of the PC 2 as a transmission source of a connection request are registered in the non-redirect list of the storage unit 136 or not. The present invention is not limited to this example, and the printer 104 may determine whether other various types of identification information, other than the MAC address or the IP address, that uniquely identify the PC 2 as a transmission source of a connection request are registered in the non-redirect list of the storage unit 136 or not.

In the second embodiment described above, the printer 104 may register, in advance, identification information for identifying the PC 2 that has updated the certificate before update of the current certificate to the new certificate (i.e., the PC 2 that has uploaded the certificate within the expiration date to the printer 104) in the non-redirect list, and in step SP10 of the certificate update processing procedure RT101 (FIG. 6), may determine whether identification information of the PC 2 as a transmission source of a connection request is registered in this non-redirect list of the storage unit 136 or not.

In the case described in the third embodiment, the new certificate is transmitted from the PC 202, which is a personal computer, to the printer 204. The present invention is not limited to this example, and the new certificate may be transmitted to the printer 204 from other various devices having a wireless communication function, such as portable terminals including smartphones, tablets, and the like.

In the case described in the third embodiment, the certificate is uploaded to the printer 204 from the PC 202 by wireless communication. The present invention is not limited to this example, and the certificate may be uploaded to the printer 204 by wireless communication from various other administrator PCs operated by an administrator having the authority of updating the certificate of the printer 204.

The function of the printer 4 in the first embodiment described above may be implemented by other various devices such as the PC 2. The same holds for the second and third embodiments.

In the case described in the first embodiment, the present invention is applied to the printer 4. The present invention is not limited to this example, and is also applicable to the printer 4 with various other functions, such as copying machines, facsimile machines, and multi function peripherals (MFPs) having the functions of copying machines and facsimile machines. The present invention is also applicable to various other types of electronic equipment that perform network communication, such as household electrical appliances and sensors. The same holds for the second and third embodiments.

The present invention is not limited to the above-described embodiments and other embodiments. That is, the present invention is also applicable to an embodiment in which the above-described embodiments and part or all of the above-described other embodiments are arbitrarily combined. The present invention also includes embodiments in which part of the configuration described in any of the above-described embodiments and other embodiments is extracted and replaced with or diverted from part of the configuration of any of the above-described embodiments and other embodiments, and embodiments in which the extracted part of the configuration is added to any of the embodiments.

In the case described in the first embodiment, the printer 4 as a communication device includes the storage unit 36 as a storage unit, the time management unit 38 as a management unit, the HTTP control unit 42 and the wired communication unit 32 as a communication unit, and the control unit 30 as a control unit. The present invention is not limited to this example, and the communication device may be composed of a storage unit, a management unit, a communication unit, and a control unit, each of which have other configurations.

Aspects of the present invention will be described below as appendixes.

### (Appendix 1)

A communication device capable of communicating with an external device in first communication and second communication with a higher security level than the first communication, the communication device including:
a storage unit that stores a first electronic certificate to be used in the second communication;
a management unit that manages an expiration date of the first electronic certificate;
a communication unit that communicates with the external device in the first communication or the second communication; and
a control unit that controls operation of the communication device, wherein
in a state where the communication unit is set to communicate with the external device in the second communication, the control unit causes the external device and the communication unit to communicate with each other in the second communication if the first electronic certificate is within the expiration date, whereas the control unit causes the external device and the communication unit to communicate with each other in communication other than the second communication if the first electronic certificate is out of the expiration date.

### (Appendix 2)

The communication device described in Appendix 1, wherein
in the state where the communication unit is set to communicate with the external device in the second communication, the control unit causes the external device and the communication unit to communicate with each other in the first communication if the first electronic certificate is out of the expiration date.

### (Appendix 3)

The communication device described in Appendix 2, wherein
in the state where the communication unit is set to communicate with the external device in the second communication, if the first electronic certificate is out of the expiration date, the control unit causes the external device and the communication unit to communicate with each other in the first communication, updates the first electronic certificate to a second electronic certificate within the expiration date, and then switches from the first communication to the second communication to cause the external device and the communication unit to communicate with each other in the second communication using the second electronic certificate.

### (Appendix 4)

The communication device described in Appendix 1, wherein in the state where the communication unit is set to communicate with the external device in the second communication, if the first electronic certificate is out of the expiration date, the control unit operates as an access point mode, causes the external device and the communication unit to communicate with each other in the first communication, and updates the first electronic certificate to a second electronic certificate within the expiration date.

### (Appendix 5)

The communication device described in Appendix 1, further including
a selection unit that selects one of the first communication and the second communication for communication with the external device, wherein
the control unit causes the external device and the communication unit to communicate with each other in the one of the first communication and the second communication selected by the selection unit, and
in a state where the second communication is selected by the selection unit, if the first electronic certificate is within the expiration date, the control unit causes the external device and the communication unit to communicate with each other in the second communication, whereas if the first electronic certificate is out of the expiration date, the control unit causes the external device and the communication unit to communicate with each other in communication other than the second communication.

### (Appendix 6)

The communication device described in any one of Appendixes 1 to 3, wherein the storage unit stores identification information for identifying the external device, in the state where the communication unit is set to communicate with the external device in the second communication, if the first electronic certificate is out of the expiration date, the controlunit causes the communication unit and the external device including the identification information stored in the storage unit to communicate with each other in communication other than the second communication, and prevents communication between the communication unit and the external device without the identification information stored in the storage unit in the second communication.

### (Appendix 7)

The communication device described in Appendix 6, wherein the identification information is identification information of the external device used for updating an electronic certificate before update of the first electronic certificate.

### (Appendix 8)

The communication device described in Appendix 1, wherein in a state where: the communication device is set to cause the external device and to communicate with each other in the second communication; and the communication device asks the external device to switch connection from the first communication to the second communication when connection is performed from the external device in the first communication, the control unit causes the external device and the communication unit to communicate with each other in the second communication if the first electronic certificate is within the expiration date, whereas the control unit causes the external device and the communication unit to communicate with each other in communication other than the second communication if the first electronic certificate is out of the expiration date.

### (Appendix 9)

A communication system in which a terminal and a communication device are capable of communicating with each other in first communication and second communication with a higher security level than the first communication, the communication system including:
a storage unit that stores a first electronic certificate to be used in the second communication;
a management unit that manages an expiration date of the first electronic certificate; and
a control unit that causes the terminal and the communication device to communicate with each other if the first electronic certificate is within the expiration date and that causes the terminal and the communication device to communicate with each other in communication other than the second communication if the first electronic certificate is out of the expiration date, in a state where the terminal and the communication device are set to communicate with each other in the second communication.

### (Appendix 10)

The communication system described in Appendix 9, wherein in the state where the terminal and the communication device are set to communicate with each other in the second communication, if the first electronic certificate is out of the expiration date, the control unit causes the terminal and the communication device to communicate with each other in the first communication.

### (Appendix 11)

The communication system described in Appendix 10, wherein in the state where the terminal and the communication device are set to communicate with each other in the second communication, if the first electronic certificate is out of the expiration date, the control unit updates the first electronic certificate to a second electronic certificate within the expiration date through communication between the terminal and the communication device in the first communication, then switches from the first communication to the second communication, and causes the terminal and the communication device to communicate with each other in the second communication using the second electronic certificate.

### (Appendix 12)

The communication system described in Appendix 9, wherein in the state where the terminal and the communication device are set to communicate with each other in the second communication, if the first electronic certificate is out of the expiration date, the control unit causes the communication device to operate as an access point mode, causes the terminal and the communication device to communicate with each other in the first communication, and updates the first electronic certificate to a second electronic certificate within the expiration date.

### (Appendix 13)

The communication system described in Appendix 9, further including
a selection unit that selects one of the first communication and the second communication for communication between the terminal and the communication device, wherein
the control unit causes the terminal and the communication device to communicate with each other in the one of the first communication and the second communication selected by the selection unit, and in a state where the second communication is selected by the selection unit, if the first electronic certificate is within the expiration date, the control unit causes the terminal and the communication device to communicate with each other in the second communication, whereas if the first electronic certificate is out of the expiration date, the control unit causes the terminal and the communication device to communicate with each other in communication other than the second communication.

### (Appendix 14)

The communication system described in any one of Appendixes 9 to 11, wherein
the storage unit stores identification information for identifying the terminal, and
in the state where the terminal and the communication device are set to communicate with each other in the second communication, if the first electronic certificate is out of the expiration date, the control unit causes the communication device and the terminal including the identification information stored in the storage unit to communicate with each other in the second communication, and prevents communication between the communication device and the terminal without the identification information stored in the storage unit in the second communication.

### (Appendix 15)

The communication system described in Appendix 14, wherein the identification information is identification information of the terminal used for updating an electronic certificate before update of the first electronic certificate.

### (Appendix 16)

The communication system described in Appendix 9, wherein in a state where: the terminal and the communication device are set to communicate with each other in the second communication; and the communication device asks the terminal to switch connection from the first communication to the second communication when connection is performed from the terminal to the communication device in the first communication, the control unit causes the terminal and the communication device to communicate with each other in the second communication if the first electronic certificate is within the expiration date, whereas the control unit causes the terminal and the communication device to communicate with each other in communication other than the second communication if the first electronic certificate is out of the expiration date.

### (Appendix 17)

A communication setting method for setting communication between a terminal and a communication device capable of communication in first communication and second communication with a higher security level than the first communication, the communication setting method including steps of: causing the communication device to receive a connection request in the first communication from the terminal; determining an expiration date of a first electronic certificate to be used in the second communication, after receiving the connection request; causing the terminal and the communication device to communicate with each other in communication other than the second communication if the first electronic certificate is out of the expiration date in a state where the terminal and the communication device are set to communicate with each other in the second communication.

### (Appendix-18)

The communication setting method described in Appendix 17, further including a step of setting the terminal and the communication device such that the terminal and the communication device communicate with each other in the second communication before the communication device receives the connection request in the first communication from the terminal.

### (Appendix 19)

The communication setting method described in Appendix 17 or 18, further including a step of updating the first electronic certificate to a second electronic certificate within the expiration date if the first electronic certificate is out of the expiration date in the state where the terminal and the communication device are set to communicate with each other in the second communication.

### (Appendix 20)

The communication setting method described in Appendix 17, further including a step of updating the first electronic certificate to a second electronic certificate within the expiration date by causing the communication device to communicate with the terminal in an access point mode other than the second communication if the first electronic certificate is out of the expiration date in the state where the terminal and the communication device are set to communicate with each other in the second communication.

### Industrial Applicability

The present invention is also applicable to various systems that update electronic certificates installed in information processing devices.

### Description of Reference Characters

1, 101, 201 certificate update system, 2, 202 PC, 4, 104, 204 printer, 10, 210 control unit, 12 wired communication unit, 14 wireless communication unit, 16 operation unit, 18 display unit, 20 HTTP control unit, 22 cryptographic communication processing unit, 30, 130, 230 control unit, 32 wired communication unit, 34 wireless communication unit, 36, 136 storage unit, 38 date and time management unit, 40 display operation unit, 42 HTTP control unit, 44 cryptographic communication processing unit, NT1, NT2 network, DIP communication setting screen.

## Claims

1. A communication device (4) capable of communicating with an external device (2) in first communication and second communication with a higher security level than the first communication, the communication device (4) comprising:
a storage unit (36) that stores a first electronic certificate to be used in the second communication;
a management unit (38) that manages an expiration date of the first electronic certificate;
a communication unit (32) that communicates with the external device (2) in the first communication or the second communication; and
a control unit (30) that controls operation of the communication device (4), wherein
in a state where the communication unit (32) is set to communicate with the external device (2) in the second communication, the control unit (30) causes the external device (2) and the communication unit (32) to communicate with each other in the second communication if the first electronic certificate is within the expiration date, whereas the control unit (30) causes the external device (2) and the communication unit (32) to communicate with each other in communication other than the second communication if the first electronic certificate is out of the expiration date.

2. The communication device (4) according to any of the preceding claims, wherein
in the state where the communication unit (32) is set to communicate with the external device (2) in the second communication, the control unit (30) causes the external device (2) and the communication unit (32) to communicate with each other in the first communication if the first electronic certificate is out of the expiration date.

3. The communication device (4) according to claim 2, wherein
in the state where the communication unit (32) is set to communicate with the external device (2) in the second communication, if the first electronic certificate is out of the expiration date, the control unit (30) causes the external device (2) and the communication unit (32) to communicate with each other in the first communication, updates the first electronic certificate to a second electronic certificate within the expiration date, and then switches from the first communication to the second communication to cause the external device (2) and the communication unit (32) to communicate with each other in the second communication using the second electronic certificate.

4. The communication device (4) according to any of the preceding claims, wherein in the state where the communication unit (32) is set to communicate with the external device (2) in the second communication, if the first electronic certificate is out of the expiration date, the control unit (30) operates as an access point mode, causes the external device (2) and the communication unit (32) to communicate with each other in the first communication, and updates the first electronic certificate to a second electronic certificate within the expiration date.

5. The communication device (4) according to any of the preceding claims, further comprising
a selection unit (40) that selects one of the first communication and the second communication for communication with the external device (2), wherein
the control unit (30) causes the external device (2) and the communication unit (32) to communicate with each other in the one of the first communication and the second communication selected by the selection unit (40), and
in a state where the second communication is selected by the selection unit (40), if the first electronic certificate is within the expiration date, the control unit (30) causes the external device (2) and the communication unit (32) to communicate with each other in the second communication, whereas if the first electronic certificate is out of the expiration date, the control unit (30) causes the external device (2) and the communication unit (32) to communicate with each other in communication other than the second communication.

6. The communication device (4) according to any one of claims 1 to 3, wherein
the storage unit (36) stores identification information for identifying the external device (2), and
in the state where the communication unit (32) is set to communicate with the external device (2) in the second communication, if the first electronic certificate is out of the expiration date, the control unit (30) causes the communication unit (32) and the external device (2) including the identification information stored in the storage unit (36) to communicate with each other in communication other than the second communication, and prevents communication between the communication unit (32) and the external device (2) without the identification information stored in the storage unit (36).

7. The communication device (4) according to claim 6, wherein the identification information is identification information of the external device (2) used for updating an electronic certificate before update of the first electronic certificate.

8. The communication device (4) according to any of the preceding claims, wherein in a state where: the communication device (4) is set to cause the external device (2) and to communicate with each other in the second communication; and the communication device (4) asks the external device (2) to switch connection from the first communication to the second communication when connection is performed from the external device (2) in the first communication, the control unit (30) causes the external device (2) and the communication unit (32) to communicate with each other in the second communication if the first electronic certificate is within the expiration date, whereas the control unit (30) causes the external device (2) and the communication unit (32) to communicate with each other in communication other than the second communication if the first electronic certificate is out of the expiration date.
